# EUROPEAN PATENT APPLICATION

(11) **EP 4 715 356 A1**
(43) Date of publication of application: **25.03.2026**
(21) Application number: 24914744.8
(22) Date of filing: 31.05.2024
(51) Int. Cl.: G01L 9/00, G01D 21/02, G01K 7/22

(54) **INTEGRATED TEMPERATURE AND PRESSURE SENSOR**

(30) Priority: 05.01.2024 CN 202410020702
(71) Applicant: Churod Sensing Technologies (Suzhou) Co., Ltd, Suzhou, Jiangsu 215000 (CN)
(72) Inventor: SUN, Jiangtao, Suzhou, Jiangsu 215000 (CN); HONG, Wenhui, Suzhou, Jiangsu 215000 (CN)
(74) Representative: Osterhoff, Utz
(86) International application number: PCT/CN2024/096768
(87) International publication number: WO 2025/145522

(57) **Abstract**

An integrated temperature and pressure sensor relates to the technical field of sensors. The integrated sensor includes: a connector (1); a metal tube (2) with a cavity (21), the open end of the cavity (21) of the metal tube (2) is connected to the connector (1), and another end of the metal tube (2) is provided with a first channel (22) and a second channel (23); a carrier part (4) with an accommodation cavity (41), the carrier part is provided in the cavity (21), and the bottom of the carrier part (4) is provided with a third channel (43) communicating with the second channel (23); a thermowell (3), one end of the thermowell (3) is located in the first channel (22), and another end of the thermowell (3) extends out of the first channel (22); a temperature sensing element (5) arranged in the thermowell (3); a pressure sensing element (6) arranged in the accommodation cavity (41), and the pressure sensing element (6) is located on the third channel (43); and a circuit board (7).

## Description

### CROSS-REFERENCE TO RELATED APPLICATIONS

This application claims priority to Chinese Patent Application No. 202410020702.X, filed with the China Patent Office on January 5, 2024, and entitled "INTEGRATED TEMPERATURE AND PRESSURE SENSOR", the entire contents of which are incorporated herein by reference.

### TECHNICAL FIELD

The present application relates to the technical field of sensors, and in particular to an integrated temperature and pressure sensor.

### BACKGROUND

With the popularization of new energy vehicles, people's requirements for the battery life of electric vehicles continue to increase, and the power consumption of thermal management systems has become particularly important. In the thermal management system of new energy vehicles, accurate control of the opening degree of an electromagnetic expansion valve requires timely measurement of the medium pressure and temperature before and after the valve. In the related art, the thermistor of a temperature-pressure sensor is exposed to the medium. The temperature signal directly contacting the medium can significantly improve the temperature response time. However, this design reduces the sensor's reliability. At the same time, since the detected pipeline inevitably contains conductive fibers (such as residual fibers of metal parts, iron filings, etc.), their circulation in the medium is likely to cause a short circuit in the temperature signal. For existing products where the thermistor is wrapped, they generally face the problem of how to transmit the temperature signal through the pressure-sensing unit to the electrical processing unit.

Currently, one approach is integral injection-molding of the thermistor and its carrier. This increases system costs, and the plastic casing hinders heat transfer between the medium and the sensitive head of the thermistor, leading to lower accuracy and longer response time of the temperature-pressure integrated sensor. Alternatively, the thermistor may be connected to a flexible circuit board that bypasses the pressure-sensing component via the side wall to reach the electrical processing unit. This approach complicates the process, increases production costs, but also reduces product reliability.

In addition, most of the sensing channels of the integrated pressure and temperature sensors in the related art adopt an eccentric design, resulting in high manufacturing costs.

### SUMMARY

The purpose of the present application is to overcome the defects of the related art and provide an integrated temperature and pressure sensor to solve the problems of high cost and low reliability of the integrated pressure and temperature sensors in the related art.

To achieve the above and other objectives, the present application is implemented through the following technical solutions: the present application provides an integrated temperature and pressure sensor, including: a connector; a metal tube with a cavity; a carrier part with an accommodation cavity; a thermowell; a temperature sensing element provided in the thermowell; a pressure sensing element provided in the accommodation cavity; and

a circuit board provided in the cavity, an open end of the cavity of the metal tube is connected to the connector, and an opposite end of the metal tube is provided with a first channel and a second channel, the first channel and the second channel are in communication with the cavity and independent of each other; the carrier part is provided in the cavity, a bottom of the carrier part is provided with a third channel communicating with the second channel, and the third channel is in communication with the accommodation cavity; one end of the thermowell is located in the first channel, and the other end of the thermowell extends out of the first channel; the pressure sensing element is located on the third channel; one end of the circuit board is electrically connected to the connector, the other end of the circuit board is electrically connected to the temperature sensing element and the pressure sensing element, and an electrical connection route between the temperature sensing element and the circuit board passes through the first channel and then penetrates the carrier part; and

an end surface of the carrier part that cooperates with a bottom of the cavity is provided with a first groove and a second groove, the second groove is located on a periphery of the first groove, the first groove and the second groove are provided on a bottom wall of the carrier part or the bottom of the cavity, a first sealing ring and a second sealing ring are respectively provided in the first groove and the second groove, and the second channel is located between the first groove and the second groove.

In an embodiment, a gap is reserved on the end surface of the carrier part that interfaces with a bottom of the metal tube cavity, the gap is located between the first groove and the second groove, and the gap is in communication with the second channel and the third channel.

In an embodiment, a positioning post extends from the bottom wall of the carrier part, and the positioning post is at least partially located in the first channel.

In an embodiment, the first sealing ring is positioned adjacent to or spaced apart from the positioning post on the side close to the first channel.

In an embodiment, the first groove and the second groove are provided at the bottom of the metal tube cavity, the width of the first groove is smaller than the width of the second groove. a sealing edge is disposed around the periphery of the positioning post, and a sealing surface is formed between the sealing edge and the first sealing ring.

In an embodiment, the accommodation cavity groove is provided with a third groove and a fourth groove, the fourth groove is located on the periphery of the third groove, a third sealing ring is provided in the fourth groove, and the third groove is in communication with the third channel.

In an embodiment, the pressure sensing element is located on the third sealing ring, and the circuit board is located on the pressure sensing element.

In an embodiment, a flange is provided on an outer wall of the thermowell, a stepped notch is provided at one end of the first channel away from the cavity, and the stepped notch and the flange form a sealing surface.

In an embodiment, the temperature sensing element is connected to the circuit board through a first conductor, one end of the first conductor is located in the first channel, and another end of the first conductor penetrates the carrier part and passes through a side wall of the accommodation cavity to be connected to the circuit board.

In an embodiment, the connector is snap-connected to the carrier part, a clamping part is provided on an outer wall of the carrier part, a fastener is provided at the connector, and the fastener is clamped into the clamping part to form a snap connection.

In an embodiment, the clamping part includes a clamping groove and a clamping point provided on the outer side wall of the carrier part, the clamping point is located on an inner wall of the clamping groove, the fastener includes a fastener rod and a fastener hook, the fastener rod extends into the clamping groove, and the fastener hook hooks the clamping point to form a snap connection.

In an embodiment, the pressure sensing member is a circular pressure sensing member.

In an embodiment, the clamping parts and the fasteners include two clamping parts and two fasteners, two clamping parts and two fasteners are symmetrically distributed on both sides of the connection end of the first conductor and the circuit board.

In an embodiment, the first conductor and the carrier part are integrally formed.

In an embodiment, the first groove, the second groove, the third groove, the fourth groove, and the first channel share the same axis.

The present application provides an integrated temperature and pressure sensor. Compared with the related art, the present application has the following beneficial effects. The thermistor is wrapped in a thin-walled metal structure with thermal conductive adhesive, which protects the thermistor and maximizes its response time. At the same time, the temperature signal is transmitted through the pressure-sensing component via the carrier part, ensuring the independence of the temperature sensing channel and the pressure sensing channel. This not only retains the reliability advantages of the current single-temperature products but also maximizes the optimization of the assembly process, thereby improving reliability and reducing system costs. In some embodiments, except for the pressure sensing channel hole, the metal tube and the carrier part adopt a centrally symmetric design. Compared with the eccentric structure design of the sensor in the related art, the manufacturing cost of parts can be greatly reduced while ensuring the reliability of the structure and function.

### BRIEF DESCRIPTION OF THE DRAWINGS

FIG. 1 is an overall structural schematic diagram of the integrated temperature and pressure sensor of the present application.
FIG. 2 is a front cross-sectional view of the integrated temperature and pressure sensor of the present application.
FIG. 3 is a structural schematic diagram of the metal tube of the present application.
FIG. 4 is a structural schematic diagram of the carrier part of the present application.
FIG. 5 is a structural schematic diagram of the bottom wall of the carrier part of the present application.
FIG. 6 is a structural schematic diagram of the connector of the present application.
FIG. 7 is an exploded view of part of the structure of the present application.
FIG. 8 is a side cross-sectional view of the integrated temperature and pressure sensor of the present application.
FIG. 9 is an electrical connection diagram of the sensor of the present application.
FIG. 10 is a cross-sectional view of the integrated temperature and pressure sensor according to an embodiment of the present application.
FIG. 11 is a cross-sectional view of the integrated temperature and pressure sensor according to an embodiment of the present application.
FIG. 12 is a cross-sectional view of the integrated temperature and pressure sensor according to an embodiment of the present application.
FIG. 13 is a cross-sectional view of the integrated temperature and pressure sensor according to an embodiment of the present application.
FIG. 14 is a structural schematic diagram of the bottom wall of the carrier part in FIG. 13.
FIG. 15 is a cross-sectional view of the integrated temperature and pressure sensor according to an embodiment of the present application.

In the figure: 1-connector, 2-metal tube, 3-thermowell, 4-carrier part, 5-temperature sensing element, 6-pressure sensing element, 7-circuit board, A-second conductor, B-connecting wire, C-first conductor, S1-first sealing ring, S2-second sealing ring, S3-third sealing ring, S4-fourth sealing ring, 11-through hole, 12-fastener, 12a-fastener rod, 12b-fastener hook, 21-cavity, 22-cavity groove, G1-first groove, G2-second groove, 22-first channel, 22a-stepped notch, 23-second channel, 23a-first passage, 23b-second passage, 31-flange, 42-accommodation cavity groove, 42a-third groove, 42b-fourth groove, 43-third channel, 44-positioning post, 45-clamping part, 45a-clamping groove, 45b-clamping point, 46-sealing edge, 51-thermal conductive adhesive, 61-pressure sensing thick plate, 62-pressure sensing thin plate, 63-leading-out terminal.

### DETAILED DESCRIPTION OF THE EMBODIMENTS

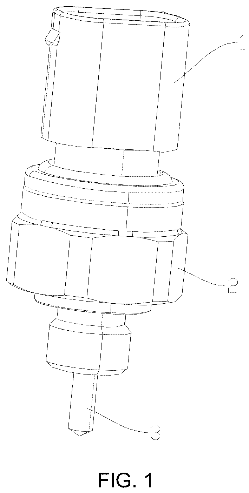

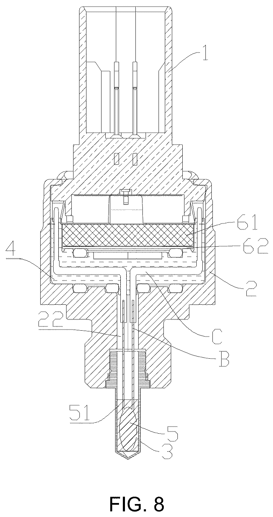

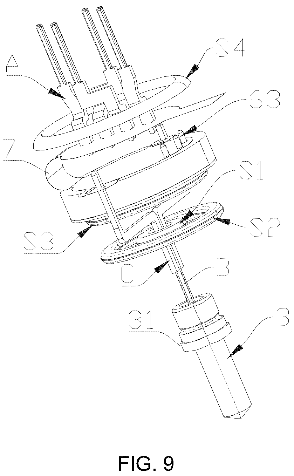

Please refer to FIG. 1 to FIG. 15. The following describes the embodiments of the present application through specific examples, and those skilled in the art can easily understand other advantages and effects of the present application from the content disclosed in this specification. The present application can also be implemented or applied through different specific embodiments, and various modifications or changes can be made to the details in this specification based on different viewpoints and applications without departing from the spirit of the present application.

As shown in FIG. 1, the present application provides an integrated temperature and pressure sensor, which is a sensor capable of simultaneously measuring pressure and temperature. The integrated sensor includes a connector 1, which can electrically connect the sensor to a monitoring and reading device such as a computer. The structure of the connector 1 is not fixed and can be made into various shapes as required.

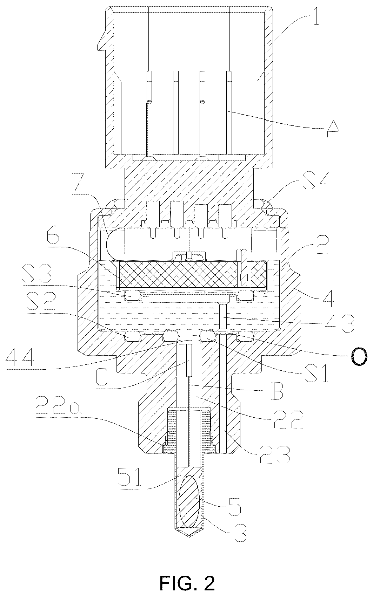

As shown in FIG. 2, the integrated sensor includes a metal tube 2, which may be an aluminum metal tube.

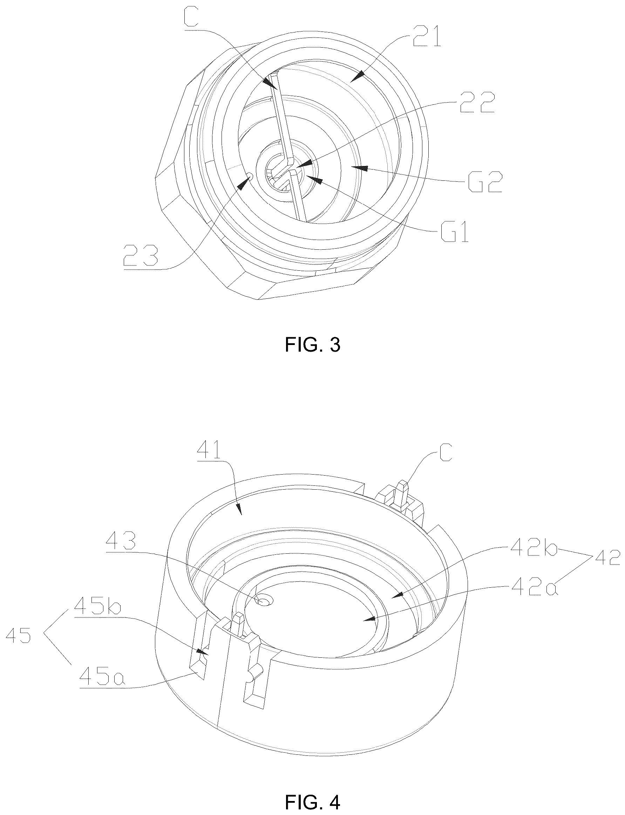

As shown in FIG. 2 and FIG. 3, the metal tube 2 has a cavity 21. The open end of the cavity 21 of the metal tube can be connected to one end of the connector 1. The other end of the metal tube 2 away from the open end is provided with a first channel 22 and a second channel 23 that are in communication with the cavity 21. The first channel 22 and the second channel 23 are independent of each other. The first channel 22 is a temperature sensing channel, and the second channel 23 is a pressure sensing channel. The first channel 22 may be located at the center of the thermowell 3, and the second channel 23 is located on one side of the first channel 22.

As shown in FIG. 2 and FIG. 3, a thermowell 3 is provided at one end of the first channel 22 away from the cavity 21. One end of the thermowell 3 is arranged in the first channel 22, and the other end of the thermowell 3 extends a certain distance out of the first channel 22 to sense the temperature of the detected medium. The thermowell 3 may be made of stainless steel.

As shown in FIG. 2, a temperature sensing element 5 is arranged inside the thermowell 3. The temperature sensing element 5 may be a thermistor, such as an NTC thermistor. A thermal conductive adhesive 51 is also arranged between the temperature sensing element 5 and the thermowell 3. The thermal conductive adhesive 51 may be a silicone-based or epoxy-based thermal conductive adhesive. Wrapping the temperature sensing element 5 in the thermowell 3 can prevent the temperature sensing element 5 from directly contacting the measured medium. This design avoids short circuits caused by conductive impurities in the medium and ensures the temperature sensing element's service life and reliability. The filled thermal conductive adhesive 51 can also greatly improve the temperature sensing response speed and play a role in positioning and protecting the thermistor. The wall thickness of the thermowell 3 may be 0.05-1 mm, such as 0.08 mm, 0.5 mm, etc. The thermowell 3 and the metal tube 2 are separately manufactured, and the size of the thermowell can be flexibly adjusted to match thermistors with different wire lengths, meeting customers' requirements for different products and reducing manufacturing costs.

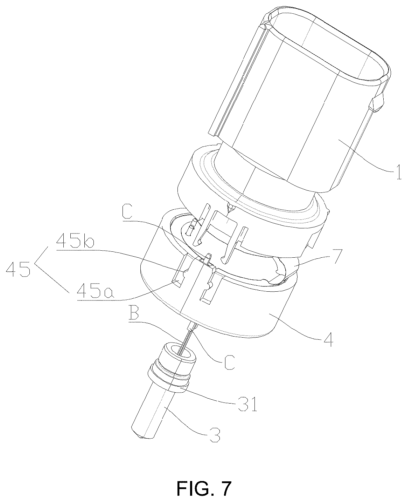

As shown in FIG. 2 and FIG. 7, the thermowell 3 and the metal tube 2 may have different hardnesses. The thermowell 3 may be made of stainless steel, such as 430 stainless steel, which has good thermal conductivity, and the hardness of the thermowell 3 may be greater than that of the metal tube 2. A stepped notch 22a matching the thermowell 3 is provided at one end of the first channel away from the cavity. A flange 31 is provided on the outer wall of the thermowell 3. The flange 31 and the stepped notch 22a form a sealing surface through interference extrusion thereby sealing the first channel 22. This interference extrusion may be achieved through a press riveting process.

As shown in FIG. 2 and FIG. 3, the end surface of the carrier part 4 that cooperates with the bottom of the cavity 21 is provided with a first groove G1 and a second groove G2. The second groove G2 is located on the periphery of the first groove G1. The first groove G1 and the second groove G2 are arranged on the bottom wall of the carrier part 4 or the bottom of the cavity 21. The first groove G1, the second groove G2, and the first channel 22 may be coaxial to facilitate reducing processing costs.

In one embodiment, the first groove G1 and the second groove G2 are arranged at the bottom of the cavity 21.

As shown in FIG. 2 and FIG. 3, the bottom of the cavity 21 is provided with grooves, including a first groove G1 and a second groove G2. The first groove G1 is in communication with the first channel 22. A first sealing ring S1 is arranged in the first groove G1, and a second sealing ring S2 is arranged in the second groove G2. The second channel 23 is arranged between the first groove G1 and the second groove G2. The first sealing ring S1 and the second sealing ring S2 can jointly cooperate to prevent the measured medium from entering the interior of the sensor through the second channel 23. This prevents damage to the sensor's electrical components

As shown in FIG. 2 and FIG. 3, a gap O is reserved between the bottom wall of the carrier part 2 and the cavity 21 of the metal tube. The gap O is located between the first groove G1 and the second groove G2, and the gap O is in communication with the second channel 23 and the third channel 43.

As shown in FIG. 2 and FIG. 3, that is, a gap O is formed between the side wall between the first groove G1 and the second groove G2 and the cavity 21 of the metal tube. This allows the carrier part 4 to be directly placed into the cavity 21 during the assembly of the carrier part 4 and the metal tube 2, avoiding the problem that the second channel 23 and the third channel 43 can only be communicated by aligning the hole of the second channel 23 during installation, and improving the installation efficiency.

As shown in FIG. 2, FIG. 3, and FIG. 4, the sensor includes a carrier part 4 arranged in the cavity 21 of the metal tube 2. The carrier part 4 includes an accommodation cavity 41. An accommodation cavity groove 42 is arranged in the accommodation cavity 41. The accommodation cavity groove 42 includes a third groove 42a and a fourth groove 42b. The fourth groove 42b is arranged on the periphery of the third groove 42a. A third sealing ring S3 is arranged in the fourth groove 42b. The bottom of the carrier part 4 is provided with a third channel 43 communicating with the second channel 23. The third groove 42a is in communication with the third channel 43. The first sealing ring S1 and the second sealing ring S2 can jointly form a sealing surface on both sides of the connection between the second channel 23 and the third channel 43 to prevent the detected medium from entering the interior of the sensor.

The first groove G1, the second groove G2, the third groove 42a, and the fourth groove 42b may be coaxial with the first channel 22.

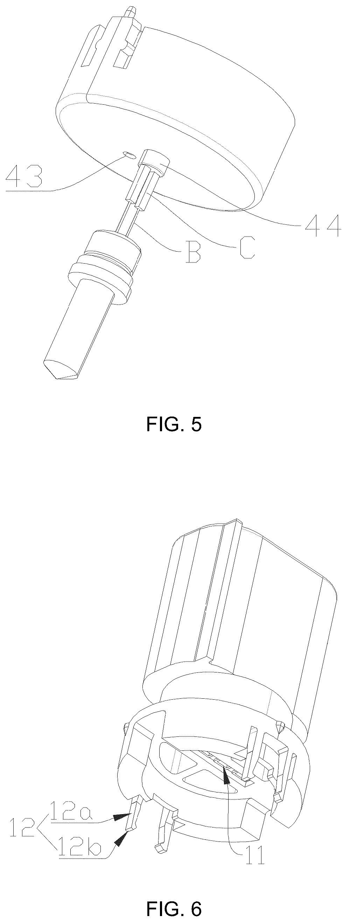

As shown in FIG. 2 and FIG. 5, the bottom wall of the carrier part 4 away from the accommodation cavity 41 is provided with a positioning post 44 for convenient installation and positioning. The positioning post 44 may be arranged at the center of the carrier part 4. During installation, the positioning post 44 is at least partially located in the first channel 22 to install the positioning post 44 in the cavity 21. The first sealing ring S1 is positioned adjacent to or spaced apart from the positioning post 44 on the side close to the first channel 22.

By setting the third groove 42a and the fourth groove 42b, the present application can stabilize the third sealing ring S3, preventing the third sealing ring S3 from being sucked inward when there is negative pressure in the detected pipeline, thereby causing pressure sensing errors by pressing the pressure sensing area of the pressure sensing element 6 or causing leakage due to the exposure of the third channel 43.

As shown in FIG. 2, FIG. 4, and FIG. 7, a pressure sensing element 6 is further arranged in the accommodation cavity 41. The pressure sensing element 6 is located on the third channel 43, and the medium pressure in the second channel 23 is sensed by the pressure sensing element 6 through the third channel 43. The pressure sensing element 6 may be a ceramic pressure sensing core, which may be in the form of a ceramic resistor, a ceramic capacitor, or a pressure sensing IC connected to a ceramic plate substrate. The pressure sensing element may include a pressure sensing thin plate 62 and a pressure sensing thick plate 61. The pressure sensing thick plate 61 may be located on the pressure sensing thin plate 62, and the pressure sensing thin plate 62 and the pressure sensing thick plate 61 may be connected together. The pressure sensing thin plate 62 can generate deformation under pressure, and output a pressure signal after being connected to the circuit board 7. The cross section of the pressure sensing element 6 may be rectangular, circular, or other shapes, but is not limited thereto. The top of the side wall of the third groove 42a and the pressure sensing element 6 may not contact each other to prevent contact with the pressure sensing area of the pressure sensing element from affecting the accuracy of the pressure data.

As shown in FIG. 2, FIG. 7, FIG. 8, and FIG. 9, a circuit board 7 is further arranged in the cavity 21. The circuit board 7 may be a flexible circuit board. The circuit board is located on the pressure sensing element 6. One end of the circuit board 7 is electrically connected to the second conductor A in the connector 1, and the other end of the circuit board 7 is simultaneously electrically connected to the pressure sensing element 6 and the first conductor C in the first channel 22. The pressure sensing element 6 is connected to the circuit board 7 through a leading-out terminal 63.

As shown in FIG. 2 and FIG. 6, the circuit board 7 is electrically connected to the connector 1. In some embodiments, the connector 1 is provided with a through hole 11 at one end close to the metal tube 2, and a second conductor A may be arranged in the through hole 11 for outputting the signal collected by the circuit board 7 to the outside.

As shown in FIG. 4, FIG. 5, and FIG. 7, in order to connect the connector 1 and the carrier part 4, in some embodiments, a clamping part 45 is provided on the outer wall of the carrier part 4. The clamping part 45 includes a clamping groove 45a and a clamping point 45b, and the clamping point 45b is located on the inner wall of the clamping groove 45a. Correspondingly, a fastener 12 is provided at the bottom end of the connector 1, and the fastener 12 is snapped with the clamping part 45. The fastener 12 extends a certain distance from the bottom end of the connector 1 and includes a fastener rod 12a and a fastener hook 12b. The fastener hook 12b is located at the bottom of the fastener rod 12a. When connecting the connector 1 and the carrier part 4, the fastener 12 is inserted into the clamping part 45, and the fastener hook 12b hooks the clamping point 45b to complete the snap connection between the connector 1 and the carrier part 4. Both the clamping part 45 and the fastener 12 include two, and the two clamping parts 45 and the two latching fasteners 12 are symmetrically distributed on both sides of the connection end of the first conductor C and the circuit board 7.

As shown in FIG. 2 and FIG. 7, the temperature sensing element 5 may be electrically connected to the circuit board 7 through a connecting wire B and a first conductor C.

As shown in FIG. 2, FIG. 6, and FIG. 7, one end of the first conductor C is connected to the connecting wire B, and the other end of the first conductor C penetrates the carrier part 4 and is connected to the circuit board 7. The connecting wire B is connected to the temperature sensing element 5. The connecting wire B may be two connecting wires, and the first conductor C may be two symmetrically arranged conductors. The first conductor C may pass through the first channel 22, penetrate the carrier part 4, and then be connected to the circuit board 7. It is symmetrically positioned at both ends of the pressure sensing element 6. The first conductor C may exit from the first channel 22, that is, be located on one side of the second channel 23 and the third channel 43 in the pressure sensing route, so that the temperature sensing route and the pressure sensing route are effectively separated. The structure adopted in the present application enables the pressure sensing route to completely bypass the temperature sensing route, so that the two channels are connected to the circuit board 7 through their respective routes without affecting each other.

As shown in FIG. 6 and FIG. 7, one end of the first conductor C is located in the first channel 22, and the other end of the first conductor C bends and extends in the horizontal and vertical directions of the pressure sensing element 6 in the carrier part 4. The first conductor C and the carrier part 4 may be integrally formed.

As shown in FIGS. 2, 8, and 9, the connection end of the first conductor C and the circuit board 7 passes through the side wall of the accommodation cavity 41 to be connected to the circuit board 7.

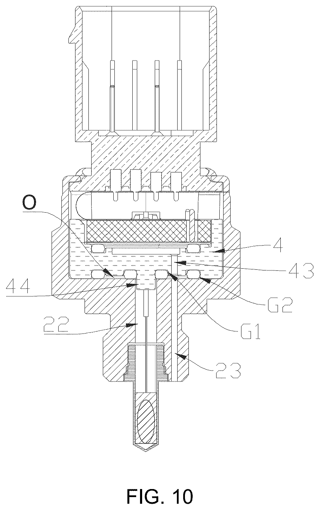

As shown in FIG. 10, in some embodiments, the first groove G1 and the second groove G2 may be arranged on the bottom wall of the carrier part 4, which can further reduce production costs. For example, the first groove G1 may be arranged on the periphery of the positioning post 44, and a gap O may be left between the bottom wall of the carrier part 4 and the cavity 21 of the metal tube.

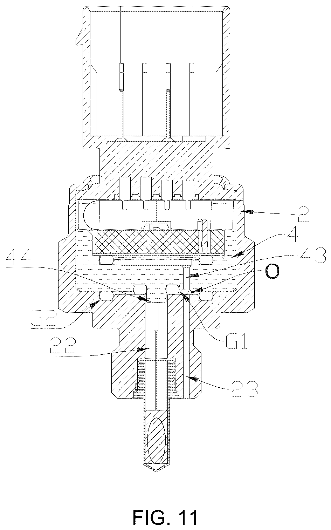

As shown in FIG. 11, in some embodiments, the first groove G1 may be arranged on the bottom wall of the carrier part 4, and the second groove G2 may be arranged at the bottom of the cavity 21 of the metal tube. The first groove G1 may be arranged on the periphery of the positioning post 44. The height of the side wall of the second groove G2 close to the first channel 22 is smaller than that of the side wall away from the first channel 22, so as to facilitate forming the gap O between the cavity 21 and the bottom wall of the carrier part 4.

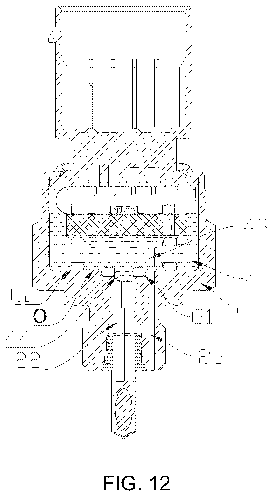

As shown in FIG. 12, in some embodiments, the first groove G1 may be arranged at the bottom of the cavity 21 of the metal tube, and the second groove G2 may be arranged on the bottom wall of the carrier part 4. The first groove G1 is in communication with the first channel 22, and the height of the side wall of the second groove G2 close to the first channel 22 is smaller than that of the side wall of the second groove G2 away from the first channel 22 to form the gap O.

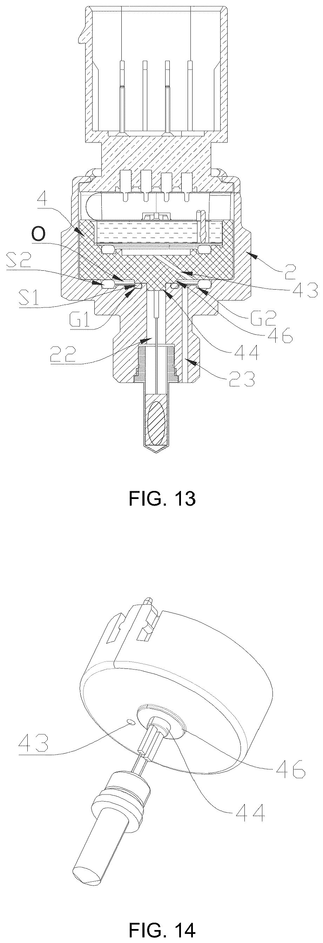

As shown in FIG. 13 and FIG. 14, in some embodiments, the first groove G1 and the second groove G2 may be located at the bottom of the cavity 21 of the metal tube, and the width of the first groove G1 is smaller than that of the second groove G2, so that a gap O can be formed between the bottom wall of the carrier part 4 and the cavity 21. A sealing edge 46 may be further arranged on the periphery of the positioning post 44, and the sealing edge 46 may cooperate with the first sealing ring S1 to form a sealing surface.

As shown in FIG. 13, the third channel 43 may form an angle with the second channel 23, that is, the structure of the third channel 43 is not limited, and the specific structure includes an inclined state or a vertical state relative to the second channel 23, but is not limited thereto, as long as it can remain in communication with the second channel 23.

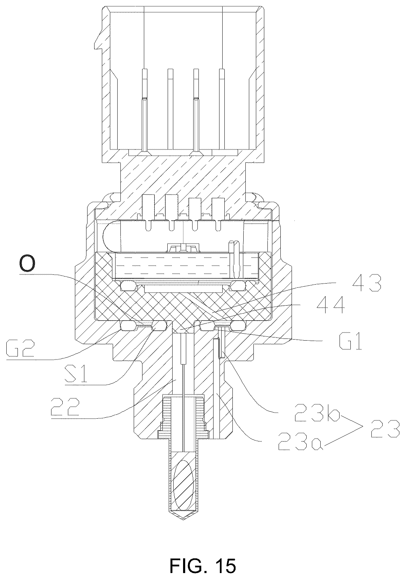

As shown in FIG. 15, in some embodiments, the first sealing ring S1 may not abut the positioning post 44. At this time, the space of the second channel 23 is limited to a certain extent. The second channel 23 may include a first passage 23a and a second passage 23b with staggered axes that are in communication, and the second passage is arranged at one end close to the gap O.

In the present application, the first sealing ring S1 may abut or not abut the positioning post 44 on the side close to the first channel 22, as long as a sealing surface can be formed.

As shown in FIG. 2 and FIG. 7, the assembly process of the present application is exemplified as follows. When assembling the sensor, the carrier part 4 and the connector 1 may be first snap-connected, then the whole is placed into the metal tube 2, and finally, the upper edge of the metal tube 2 is bent to achieve riveting with the connector 1 and the carrier part 4. Finally, roomtemperature vulcanizing silicone rubber adhesive is evenly applied to the bending place and cured at room temperature to form a fourth sealing ring S4. The first conductor C and the carrier part 4 may be integrally formed by an embedded injection molding process.

Therefore, the present application effectively overcomes various shortcomings in the related art and has high industrial application value. The above embodiments are only used to illustrate the principles and effects of the present application, not to limit the present application. Any person skilled in the art can modify or change the above embodiments without departing from the spirit and scope of the present application. Therefore, all equivalent modifications or changes completed by those with ordinary knowledge in the technical field without departing from the spirit and technical concept disclosed in the present application should still be covered by the claims of the present application.

## Claims

1. An integrated temperature and pressure sensor, **characterized by** comprising:
a connector;
a metal tube with a cavity;
a carrier part with an accommodation cavity;
a thermowell;
a temperature sensing element provided in the thermowell;
a pressure sensing element provided in the accommodation cavity; and
a circuit board provided in the cavity,
wherein an open end of the cavity of the metal tube is connected to the connector, and an opposite end of the metal tube is provided with a first channel and a second channel, the first channel and the second channel are in communication with the cavity and independent of each other;
the carrier part is provided in the cavity, a bottom of the carrier part is provided with a third channel communicating with the second channel, and the third channel is in communication with the accommodation cavity;
one end of the thermowell is located in the first channel, and the other end of the thermowell extends out of the first channel;
the pressure sensing element is located on the third channel;
one end of the circuit board is electrically connected to the connector, the other end of the circuit board is electrically connected to the temperature sensing element and the pressure sensing element, and an electrical connection route between the temperature sensing element and the circuit board passes through the first channel and then penetrates the carrier part; and
an end surface of the carrier part that cooperates with a bottom of the cavity is provided with a first groove and a second groove, the second groove is located on a periphery of the first groove, the first groove and the second groove are provided on a bottom wall of the carrier part or the bottom of the cavity, a first sealing ring and a second sealing ring are respectively provided in the first groove and the second groove, and the second channel is located between the first groove and the second groove.

2. The integrated temperature and pressure sensor according to claim 1, wherein a gap is reserved on the end surface of the carrier part that interfaces with a bottom of the metal tube cavity, the gap is located between the first groove and the second groove, and the gap is in communication with the second channel and the third channel.

3. The integrated temperature and pressure sensor according to claim 1, wherein a positioning post extends from the bottom wall of the carrier part, and the positioning post is at least partially located in the first channel.

4. The integrated temperature and pressure sensor according to claim 3, wherein the first sealing ring is positioned adjacent to or spaced apart from the positioning post on the side close to the first channel.

5. The integrated temperature and pressure sensor according to claim 1, wherein the accommodation cavity groove is provided with a third groove and a fourth groove, the fourth groove is located on the periphery of the third groove, a third sealing ring is provided in the fourth groove, and the third groove is in communication with the third channel.

6. The integrated temperature and pressure sensor according to claim 5, wherein the pressure sensing element is located on the third sealing ring, and the circuit board is located on the pressure sensing element.

7. The integrated temperature and pressure sensor according to claim 1, wherein a flange is provided on an outer wall of the thermowell, a stepped notch is provided at one end of the first channel away from the cavity, and the stepped notch and the flange form a sealing surface.

8. The integrated temperature and pressure sensor according to claim 1, wherein the temperature sensing element is connected to the circuit board through a first conductor, one end of the first conductor is located in the first channel, and another end of the first conductor penetrates the carrier part and passes through a side wall of the accommodation cavity to be connected to the circuit board.

9. The integrated temperature and pressure sensor according to claim 1, wherein the connector is snap-connected to the carrier part, a clamping part is provided on an outer wall of the carrier part, a fastener is provided at the connector, and the fastener is clamped into the clamping part to form a snap connection.

10. The integrated temperature and pressure sensor according to claim 9, wherein the clamping part comprises a clamping groove and a clamping point provided on the outer side wall of the carrier part, the clamping point is located on an inner wall of the clamping groove, the fastener comprises a fastener rod and a fastener hook, the fastener rod extends into the clamping groove, and the fastener hook hooks the clamping point to form a snap connection.
